# DEMANDE DE BREVET EUROPEEN

(11) **EP 1 120 319 A1**
(43) Date de publication de la demande: **01.08.2001**
(21) Numéro de dépôt: 01400147.3
(22) Date de dépôt: 19.01.2001
(51) Int. Cl.: B60R 19/18

(54) **Dispositif d'absorption de choc pour véhicule automobile**

(30) Priorité: 27.01.2000 FR 0001029
(71) Demandeur: Renault, 92100 Boulogne Billancourt (FR)
(72) Inventeur: Do Nascimento, Silvino, 78390 Bois d'Arcy (FR); Saillard, Patrick, 94100 Saint Maur (FR); Friard, Jean-Claude, 78170 La Celle Saint Cloud (FR)

(57) **Abrégé**

L'invention propose un dispositif d'absorption de choc (10) pour véhicule automobile du type comportant un corps composé d'une peau de bouclier transversal (12) destinée à recevoir l'impact d'un choc et d'une plaque supérieure (14) d'orientation globalement horizontale dont un bord transversal avant (16) s'étend en regard d'une partie fixe (18) de la caisse du véhicule, et du type comportant des moyens d'absorption d'énergie (20) interposés longitudinalement entre la peau de bouclier (12) et la caisse du véhicule, caractérisé en ce que la peau de bouclier (12) est montée mobile en translation par rapport à la plaque supérieure (14) entre une position arrière déployée et une position avant escamotée en cas de choc.

## Description

L'invention concerne un dispositif d'absorption de choc pour un véhicule automobile.

L'invention concerne plus particulièrement un dispositif d'absorption de choc pour un véhicule automobile du type composé d'une peau de bouclier transversal, d'une plaque supérieure et de moyens d'absorption d'énergie.

La réglementation en vigueur impose des contraintes de sécurité importantes. Les véhicules doivent absorber de plus en plus d'énergie en cas de choc pour protéger les passagers du véhicule, les piétons qui peuvent être victimes d'accidents, ainsi que pour diminuer le coût des dégâts provoqués sur le véhicule.

Des normes permettent d'évaluer le "niveau" de sécurité des véhicules. Il s'agit notamment des essais d'absorption de chocs du type "Danner". Ce test consiste à soumettre un véhicule à un choc frontal à une vitesse de 15 kilomètres par heure sur une surface d'impact correspondant à 40% de la surface du bouclier ou pare-chocs du véhicule. Les dégâts produits par le choc sont alors constatés. Plus les dégâts sont importants, plus les coûts d'assurance du véhicule sont élevés.

La quantité d'énergie absorbée par le véhicule dépend notamment des matériaux utilisés ainsi que de leur disposition et leurs dimensions.

Actuellement, les véhicules automobiles sont équipés d'un bouclier arrière constitué d'une peau de bouclier transversal destinée à recevoir l'impact d'un choc et d'une plaque supérieure d'orientation globalement horizontale dont un bord transversal s'étend en regard d'une partie fixe de la caisse du véhicule. Des moyens d'absorption énergie sont interposés longitudinalement entre la peau de bouclier et la caisse du véhicule afin d'absorber l'énergie mécanique résultante d'un choc sur la peau de bouclier.

Lors d'un choc, notamment d'un choc sur le bouclier arrière du véhicule, la peau de bouclier ainsi que la plaque supérieure se déplacent vers l'avant jusqu'à ce que le bord transversal avant de la plaque supérieure vienne en contact avec la partie fixe de la caisse. Lorsque, à cet instant, la totalité de l'énergie fournit par le choc n'est pas totalement absorbée, la peau de bouclier continue son déplacement vers l'avant provoquant alors la déformation de la plaque supérieure. Dans la plupart des cas, la plaque supérieure se déforme dans une direction verticale formant des arrêtes saillantes, dites "en accordéon", qui viennent percuter et abîmer la partie inférieure de l'élément de carrosserie, notamment du hayon arrière du véhicule.

Ainsi, un choc même à faible vitesse peut provoquer des dégâts coûteux sur des organes tels que le hayon arrière.

Dans le but de fournir une solution à ce problème, l'invention propose un dispositif d'absorption de choc pour véhicule automobile du type comportant un corps composé d'une peau de bouclier transversal destinée à recevoir l'impact d'un choc et d'une plaque supérieure d'orientation globalement horizontale dont un bord transversal avant s'étend en regard d'une partie fixe de la caisse du véhicule, et du type comportant des moyens d'absorption d'énergie interposés longitudinalement entre la peau de bouclier et la caisse du véhicule, caractérisé en ce que la peau de bouclier est montée mobile en translation par rapport à la plaque supérieure entre une position arrière déployée et une position avant escamotée en cas de choc.

Selon d'autres caractéristiques de l'invention :
- la plaque supérieure comporte une partie avant fixe et une partie arrière réalisée en une pièce avec la peau du bouclier, et la partie arrière de la plaque supérieure est montée coulissante par rapport à la partie avant ;
- le bord transversal arrière de la partie avant de la plaque supérieure s'arrête en arrière d'un panneau vertical de carrosserie ;
- le dispositif comporte des moyens formant fusible entre la partie avant et la partie arrière de la plaque supérieure qui se libère automatiquement en cas d'un choc qui provoque un effort longitudinal supérieur à un effort prédéterminé ;
- les moyens formant fusible comportent une première face de frottement de la partie avant de la plaque en contact avec une seconde face de frottement de la partie arrière de la plaque, et les efforts résistants dus aux frottements entre la première et la seconde faces de frottement sont sensiblement égaux à l'effort prédéterminé, de façon que la partie arrière de la plaque se translate lorsqu'elle est soumise à un effort supérieur ou égal à l'effort prédéterminé ;
- les moyens formant fusible comportent une goupille dont la valeur de la résistance à la rupture est sensiblement égale à la valeur de l'effort prédéterminé ;
- les moyens formant fusible comportent au moins deux formes complémentaires réalisées dans la partie avant et la partie arrière de la plaque supérieure respectivement, emboîtée l'une dans l'autre en position déployée et qui s'escamotent ou se cassent lorsque la partie arrière de la plaque supérieure est soumise à l'effort prédéterminé.

D'autres caractéristiques et avantages de l'invention apparaîtront à la lecture de la description détaillée qui suit pour la compréhension de laquelle on se reportera aux dessins annexés parmi lesquels:
- la figure 1 représente en perspective la partie arrière d'un véhicule équipé d'un dispositif d'absorption de choc selon l'invention ;
- la figure 2 est une vue en section par un plan longitudinal et vertical du dispositif d'absorption de choc réalisé selon l'invention, en position déployée ;
- la figure 3 représente en coupe et en détail les moyens formant fusible entre la partie avant et la partie arrière de la plaque supérieure, lorsque le dispositif d'absorption est en position déployée ;
- la figure 4 est une vue similaire à celle représentée à la figure 2 le dispositif d'absorption étant représenté en positon escamotée ;
- la figure 5 est une vue similaire à celle représentée à la figure 3, le dispositif d'absorption étant représenté en position escamotée.

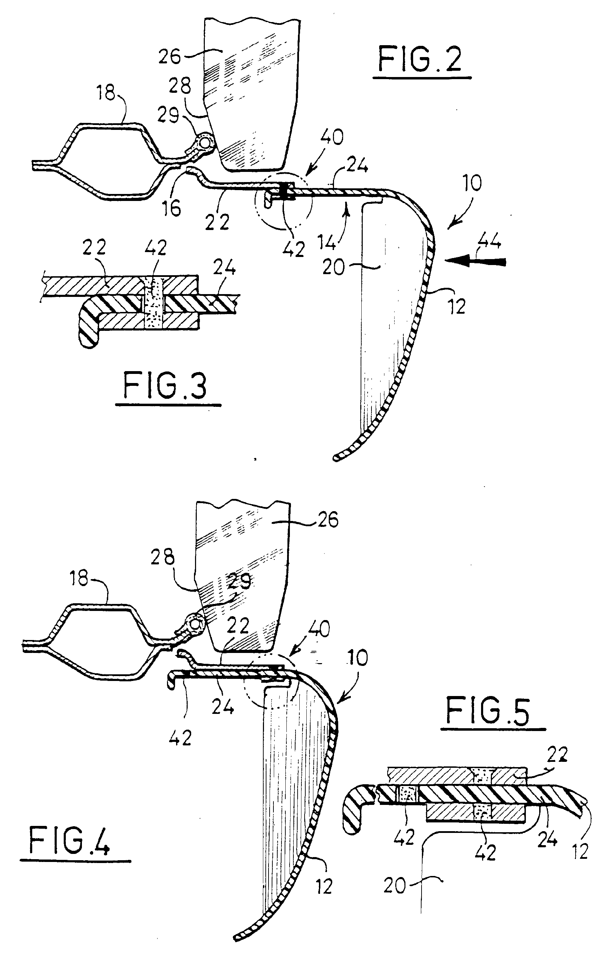

Dans la suite de la description on utilisera, à titre non limitatif, une orientation d'avant en arrière conformément de gauche à droite selon les figures 2 à 5.

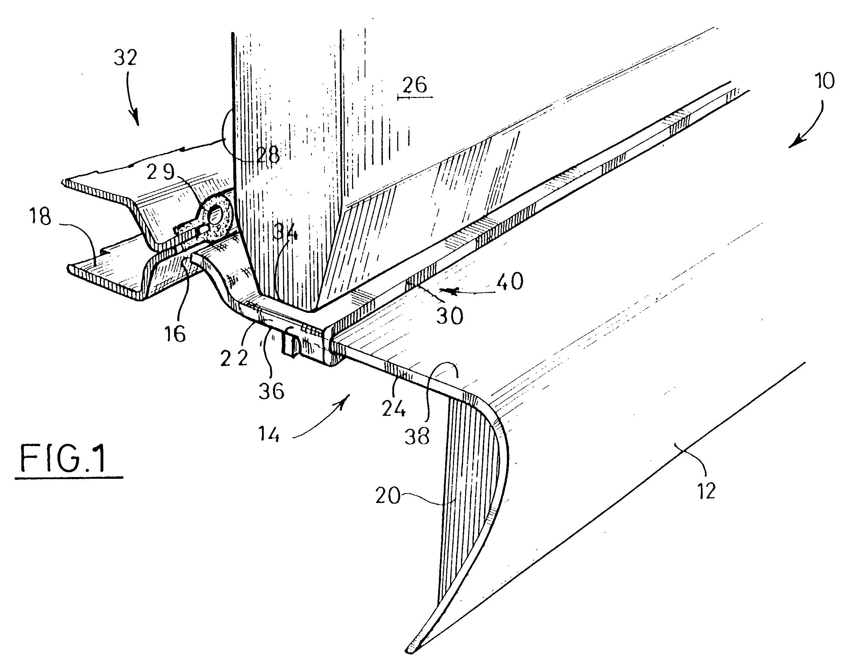

On a représenté sur la figure 1 une portion inférieure de la partie arrière d'un véhicule automobile équipé d'un dispositif d'absorption de chocs 10 selon l'invention, illustré en position arrière déployée.

Le dispositif d'absorption comprend principalement une peau de bouclier transversal 12 qui est destiné à recevoir l'impact d'un choc, une plaque supérieure 14 d'orientation globalement horizontale dont un bord transversal avant 16 s'étend en regard d'une partie fixe 18 de la caisse du véhicule, et des moyens d'absorption d'énergie 20 disposés à l'avant de la peau de bouclier 12.

Ces trois éléments sont placés transversalement par rapport au déplacement longitudinal du véhicule.

Les moyens d'absorption d'énergie 20 peuvent, par exemple et de manière connue, être constitués d'une structure en nid d'abeille, d'une mousse en matériau amortissant, etc.

Conformément à l'invention, la plaque supérieure 14 comporte une partie avant fixe 22 et une partie arrière mobile 24 qui est réalisée en une seule pièce avec la peau du bouclier 12.

La partie arrière 24 de la plaque supérieure 14 est montée coulissante longitudinalement par rapport à la partie avant 22.

Dans l'exemple présenté, un panneau transversal et vertical 26 de carrosserie, tel qu'un hayon arrière, est représenté en position fermée. Sa paroi avant 28 vient en contact avec un élément d'étanchéité 29 de façon à isoler l'intérieur du coffre 32 ou de l'habitacle du véhicule contre des éléments tels que de la poussière ou de l'eau.

La paroi inférieure horizontale 34 du panneau vertical 26 s'étend en avant d'un bord transversal arrière 30 de la partie avant 22 de la plaque supérieure 14.

En cas d'un choc dirigé de l'arrière vers l'avant sur la peau de bouclier 12, la partie arrière 24 de la plaque supérieure 14 se translate vers l'avant avec le bouclier 12.

Au cours de cette translation, les moyens d'absorption d'énergie 20 permettent de dissiper au moins une partie de l'énergie de choc, par exemple, par déformation plastique des matériaux les constituant.

La translation se poursuit jusqu'à ce que la peau de bouclier 12, et la partie arrière 24 soient dans une position escamotée, c'est la position dans laquelle la translation vers l'avant de la partie arrière 24 par rapport à la partie avant 22 n'est plus possible.

Les moyens d'absorption énergie 20 sont déterminés, de préférence, pour que, lors d'un essai de choc du type "Danner", la course entre la position déployée et la position escamotée soit suffisante pour que les moyens 20 absorbent la quasi-totalité de l'énergie provoquée par le choc. Ainsi, les parties avant 22 et arrière 24 ne sont pas déformées et ne provoquent aucun dégât sur la caisse 18 du véhicule ou sur le panneau vertical 26.

Le dispositif d'absorption peut comporter des moyens 40 formant fusible entre la partie avant 22 et la partie arrière 24 de la plaque supérieure 14. Les moyens 40 formant fusible permettent d'immobiliser les parties avant 22 et arrière 24 l'une par rapport à l'autre en usage normal, et lorsque le choc appliqué sur la peau du bouclier 12 provoque un effort longitudinal qui est inférieur à un effort prédéterminé.

Lorsque le choc appliqué provoque un effort qui est supérieur à l'effort prédéterminé, les moyens formant fusible 40 se libèrent automatiquement, et la partie arrière 24 se translate, vers l'avant, par rapport à la partie avant 22.

Les moyens formant fusible 40 sont déterminés de façon que l'application de l'effort prédéterminé sur la peau de bouclier 12 ne provoque pas de déformation plastique du dispositif d'absorption. Ainsi, l'effort qui permet leur libération doit fournir une contrainte qui est inférieure à la contrainte de déformation plastique de la peau de bouclier 12 et/ou de la plaque supérieure 14.

Les moyens formant fusible 40 peuvent comporter une première face de frottement inférieure 36 de la partie avant 22 et une seconde face de frottement supérieure 38 de la partie arrière 24 de la plaque supérieure. Les efforts résistants dus aux frottements entre la première face 36 et la seconde face 38 permettent d'immobiliser la partie arrière 24 tant que le choc appliqué sur la peau de bouclier 12 produit un effort inférieur à l'effort prédéterminé.

Selon une variante, conformément aux figures 2 à 5, les moyens formant fusible 40 comportent une goupille 42.

Les figures 2 et 3 représentent le dispositif d'absorption, en position déployée, muni de la goupille 42. Lorsqu'un choc est appliqué sur la peau de bouclier 12 dans la direction indiquée par la flèche 44, la goupille 42 est soumise à un effort tranchant qui provoque une contrainte de cisaillement. Tant que cette contrainte est inférieure à la valeur de la résistance à la rupture de la goupille 42, la partie arrière 24 et la peau du bouclier 12 sont immobilisées par rapport à la partie avant 22 de la plaque supérieure 12.

La goupille 42 se rompt lorsque la contrainte de cisaillement devient supérieure à la valeur de résistance à la rupture. La partie arrière 24 se translate alors vers l'avant jusqu'à la position escamotée représentée aux figures 4 et 5.

La valeur de la résistance à la rupture de la goupille 42 est avantageusement égale à la valeur de l'effort prédéterminé.

Selon une autre variante, les moyens formant fusible 40 comportent deux formes complémentaires l'une mâle, l'autre femelle qui sont réalisées sur la face inférieure 36 de la partie avant 22 et sur la face supérieure 38 de la partie arrière 24 de la plaque supérieure 12 respectivement.

En position déployée, les deux formes complémentaires sont emboîtées l'une dans l'autre: Lorsque la peau de bouclier 12 est soumise à un choc dont l'effort est supérieur à l'effort prédéterminé, la forme mâle de la face inférieure 36 s'escamote ou se casse de façon à permettre la translation de la partie arrière 24 vers l'avant jusqu'à la position escamotée.

L'invention permet, pour un choc correspondant à ceux des essais d'absorption du type "Danner" de diminuer fortement, voire de supprimer, les déformations plastiques du dispositif d'absorption et ainsi de limiter fortement les dégâts sur le véhicule.

L'invention est décrite précédemment pour un bouclier arrière d'un véhicule automobile. Cependant, l'invention trouve aussi à s'appliquer à un bouclier avant, le panneau vertical 26 pouvant alors être le bord avant du capot du moteur.

## Revendications

1. Dispositif d'absorption de choc (10) pour véhicule automobile du type comportant un corps composé d'une peau de bouclier transversal (12) destinée à recevoir l'impact d'un choc et d'une plaque supérieure (14) d'orientation globalement horizontale dont un bord transversal avant (16) s'étend en regard d'une partie fixe (18) de la caisse du véhicule, et du type comportant des moyens d'absorption d'énergie (20) interposés longitudinalement entre la peau de bouclier (12) et la caisse du véhicule, caractérisé en ce que la peau de bouclier (12) est montée mobile en translation par rapport à la plaque supérieure (14) entre une position arrière déployée et une position avant escamotée en cas de choc.

2. Dispositif d'absorption de choc (10) selon la revendication 1, caractérisé en ce que la plaque supérieure (14) comporte une partie avant fixe (22) et une partie arrière (24) réalisée en une pièce avec la peau du bouclier (12), et en ce que la partie arrière (24) de la plaque supérieure (14) est montée coulissante par rapport à la partie avant (22).

3. Dispositif d'absorption de choc (10) selon la revendication précédente, caractérisé ce que le bord transversal arrière (30) de la partie avant (22) de la plaque supérieure (14) s'arrête en arrière d'un panneau vertical (26) de carrosserie.

4. Dispositif d'absorption de choc (10) selon l'une des revendications 2 ou 3, caractérisé en ce qu'il comporte des moyens formant fusible (40) entre la partie avant (22) et la partie arrière (24) de la plaque supérieure (14) qui se libère automatiquement en cas d'un choc qui provoque un effort longitudinal supérieur à un effort prédéterminé.

5. Dispositif d'absorption de choc (10) selon la revendication précédente, caractérisé en ce que les moyens formant fusible (40) comportent une première face de frottement (36) de la partie avant (22) de la plaque (14) en contact avec une seconde face de frottement (38) de la partie arrière (24) de la plaque (14), et en ce que les efforts résistants dus aux frottements entre la première (36) et la seconde (38) faces de frottement sont sensiblement égaux à l'effort prédéterminé, de façon que la partie arrière (22) de la plaque (14) se translate lorsqu'elle est soumise à un effort supérieur ou égal à l'effort prédéterminé.

6. Dispositif d'absorption de choc (10) selon l'une quelconque des revendications 4 ou 5, caractérisé en ce que les moyens formant fusible (40) comportent une goupille (42) dont la valeur de la résistance à la rupture est sensiblement égale à la valeur de l'effort prédéterminé.

7. Dispositif d'absorption de choc (10) selon l'une quelconque des revendications 4 à 6, caractérisé en ce que les moyens formant fusible (40) comportent au moins deux formes complémentaires réalisées dans la partie avant (22) et la partie arrière (24) de la plaque supérieure (14) respectivement, emboîtée l'une dans l'autre en position déployée et qui s'escamotent ou se cassent lorsque la partie arrière (24) de la plaque supérieure (14) est soumise à l'effort prédéterminé.
